# FASCICULE DE BREVET EUROPEEN

(11) **EP 1 068 897 B1**
(45) Date de publication et mention de la délivrance du brevet: **29.12.2004**
(21) Numéro de dépôt: 00401875.0
(22) Date de dépôt: 30.06.2000
(51) Int. Cl.: B01J 29/74, C10G 45/64

(54) **Catalyseur et procédé d'isomérisation d'une charge comprenant des normales paraffines C5-C10**
Katalysator und Verfahren zur Isomerizierung von Normal C5-C10 Paraffine enthaltenden Einsätzen
Catalyst and process for the isomeriastion of a feed comprising normal C5-C10 paraffins

(30) Priorité: 13.07.1999 FR 9909142
(43) Date de publication de la demande: 17.01.2001
(73) Titulaire: Institut Français du Pétrole, 92852 Rueil-Malmaison Cedex (FR)
(72) Inventeur: Benazzi, Eric, 78400 Chatou (FR); Patrigeon, Anne, 75006 Paris (FR); Marcilly, Christian, 78800 Houilles (FR); Travers, Christine, 92500 Rueil Malmaison (FR)

(56) Documents cités:
- EP-A- 0 187 497
- EP-A- 0 306 237
- EP-A- 0 962 251
- WO-A-96/16142
- US-A- 4 683 214
- US-A- 4 902 406
- US-A- 5 393 717

## Description

La présente invention concerne un catalyseur d'isomérisation en présence d'hydrogène (également appelé procédé d'hydro-isomérisation) d'une charge comprenant des normales paraffines C5-C10. Le catalyseur selon l'invention comprend au moins une zéolithe de type structural TON, telles que les zéolithes ZSM-22, Θ-1, NU-10, ISI-1 ou KZ-2, décrit dans le document "Atlas of Zeolite Structure types" 4^{th} Edition, 1996, Elsevier, au moins un élément du groupe VIII (groupes 8, 9 et 10 de la nouvelle classification périodique) choisi dans le groupe constitué par le ruthénium, l'osmium, le rhodium, l'iridium, le platine et le palladium, et éventuellement une matrice. Afin d'obtenir le catalyseur actif, l'élément du groupe VIII peut être réduit à l'état de métal dont la dispersion est généralement inférieure à 65 %. L'invention concerne également un procédé d'isomérisation d'une charge comprenant des paraffines C₅-C₁₀ en présence dudit catalyseur.

### ART ANTERIEUR :

La prise en compte de contraintes environnementales accrues entraîne la suppression des composés du plomb dans les essences, effective aux Etats-Unis et au Japon et en voie de généralisation en Europe. Dans un premier temps, les composés aromatiques, constituants principaux des essences de reformage, les isoparaffines produites par alkylation aliphatique ou isomérisation d'essences légères ont compensé la perte d'octane résultant de la suppression du plomb dans les essences.

Par la suite, des composés oxygénés tels le Méthyl Tertiobutyl Ether (MTBE) ou l'Ethyl Tertiobutyl Ether (ETBE) ont été introduits dans les essences. Plus récemment, la toxicité reconnue de composés tels les aromatiques, en particulier le benzène, les oléfines et les composés soufrés, ainsi que la volonté de diminuer la pression de vapeur des essences, ont entraîné aux Etats-Unis la production d'essences reformulées. Par exemple, les teneurs maximales en oléfines, composés aromatiques et en benzène dans les essences distribuées en Californie en 1996 sont respectivement de 6 % vol., 25 % vol. et 1% vol. En Europe, les spécifications sont moins sévères, néanmoins la tendance prévisible est une réduction semblable des teneurs maximales en benzène, en composés aromatiques et en oléfines dans les essences produites et commercialisées.

Les formulations d'essences (pools essences) comprennent plusieurs composants. Les composants majoritaires sont l'essence de reformage, qui comprend habituellement entre 60 et 80 % vol. de composés aromatiques, et les essences de FCC qui contiennent typiquement 35% vol. d'aromatiques mais apportent la majorité des composés oléfiniques et soufrés présents dans les pools essences. Les autres composants peuvent être les alkylats, sans composés aromatiques ni oléfiniques, les essences légères isomérisées ou non isomérisées, qui ne contiennent pas de composés insaturés, les composés oxygénés tels le MTBE, et des butanes.

Dans la mesure où les teneurs en aromatiques ne sont pas réduites en dessous de 35 - 40% volume, la contribution des reformats dans les pools essences restera importante, typiquement 40% vol. A l'inverse, une séverisation accrue de la teneur maximale admissible en composés aromatiques à 20 - 25% vol. entrainera une diminution de l'utilisation du reformage, et par voie de conséquence la nécessité de valoriser les coupes C₇-C₁₀ de distillation directe par d'autres voies que le reformage.

Dans cette optique, la production d'isomères multibranchés à partir des heptanes et octanes faiblement branchés contenus dans les naphtas, au lieu de la production de toluène et de xylènes à partir de ces mêmes composés, apparaît comme une voie extrêmement prometteuse. Ceci justifie la recherche de systèmes catalytiques performants en isomérisation des heptanes (également appelée hydro-isomérisation lorsqu'elle est effectuée en présence d'hydrogène), des octanes et plus généralement des coupes C₅-C₈ et des coupes intermédiaires ainsi que la recherche de procédés permettant de recycler sélectivement à l'isomérisation (hydro-isomérisation) les composés de faible indices d'octane que sont les paraffines linéaires et monobranchées.

Les techniques de séparation par adsorption et par perméation sont particulièrement adaptées à la séparation des paraffines linéaires, monobranchées et multibranchées. Les procédés de séparation par adsorption conventionnels peuvent résulter de mises en oeuvre de type PSA (Pressure Swing Adsorption ou adsorption avec modulation de pression), TSA (Temperature Swing Adsorption ou adsorption avec régénération thermique), chromatographique (chromatographie d'élution ou contre courant simulé par exemple). Ils peuvent aussi résulter d'une combinaison de ces mises en oeuvre. Ces procédés ont tous en commun de mettre en contact un mélange liquide ou gazeux avec un lit fixe d'adsorbant afin d'éliminer certains constituants du mélange qui peuvent être adsorbés. La désorption peut être réalisée par différents moyens.

Ainsi, la caractéristique commune de la famille des PSA est d'effectuer la régénération du lit par dépressurisation et dans certains cas par balayage à basse pression. Les procédés de type PSA sont décrits dans le brevet US 3 430 418 de Wagner ou dans l'ouvrage plus général de Yang (" gas separation by adsorption processes ", Butterworth Publishers, US, 1987).

Les procédés TSA qui utilisent la température comme force motrice de désorption sont les premiers à avoir été développés en adsorption. Le chauffage du lit à régénérer est assuré par une circulation de gaz préchauffé, en boucle ouverte ou fermée, en sens inverse de celui de l'étape d'adsorption. De nombreuses variantes de schémas (" gas separation by adsorption processes ", Butterworth Publishers, US, 1987) sont utilisées en fonction des contraintes locales et de la nature du gaz employé.

La chromatographie, en phase gazeuse ou en phase liquide est une technique de séparation très efficace grâce à la mise en oeuvre d'un très grand nombre d'étages théoriques (Ind. Eng. Chem. Prod. Res. Develop.,1979, 18, 263). Elle permet ainsi de tirer partie de sélectivités d'adsorption relativement faibles et de réaliser des séparations difficiles. Ces procédés sont fortement concurrencés par les procédés continus à lit mobile simulé ou contre courant simulé, qui ont connus un très fort développement dans le domaine pétrolier. L'utilisation de ces procédés d'adsorption dans le domaine de la production des essences est bien connue. Ces procédés s'appliquent cependant toujours à la fraction légère C₅-C₆ dans le but d'en améliorer l'indice d'octane.

Les techniques de séparation par perméation présentent l'avantage par rapport aux séparations par adsorption d'être continues et par conséquent d'être relativement simple de mise en oeuvre. De plus elles sont reconnues pour leur modularité et leur compacité. Elles ont trouvé depuis une dizaines d'années leur place aux côtés des techniques d'adsorption en séparation de gaz, par exemple pour récupérer l'hydrogène des gaz de raffinerie, décarbonater le gaz naturel, produire de l'azote d'inertage (" Handbook of Industrial Membranes ",Elsevier Science Publishers, UK, 1995).

Concernant les systèmes catalytiques d'isomérisation des parrafines, un compromis est à trouver entre l'isomérisation proprement dite et le craquage acide ou l'hydrogénolyse, qui produisent des hydrocarbures légers C₁-C₄ et font chuter les rendements globaux. Ainsi, plus la paraffine est branchée plus elle s'isomérise facilement, mais aussi plus grande est sa propension au craquage. Ceci justifie la recherche de catalyseurs plus sélectifs, ainsi que des procédés agencés de façon à alimenter des sections d'isomérisation différentes avec des flux riches en paraffines linéaires ou en paraffines monobranchées.

Les systèmes catalytiques décrits dans la littérature font intervenir des catalyseurs bifonctionnels, tels Pt/zéolithe Bêta (Martens et al., J. Catal., 1995, 159, 323), Pt/SAPO-5 ou Pt/SAPO -11 (Campelo et al., J. Chem. Soc., Faraday Trans., 1995, 91, 1551), des catalyseurs monofonctionnels oxycarbures massiques ou supportés sur SiC (Ledoux et al., Ind. Eng. Chem. Res., 1994, 33, 1957), des systèmes monofonctionnels acides tels les alumines chlorées (Travers et al., Rev. Inst. Fr. Petr., 1991, 46, 89), les zircones sulfatées (Iglesia et al., J. Catal., 1993, 144, 238) ou certains hétéropolyacides (Vedrine et al., Catal. Lett., 1995, 34, 223).

L'isomérisation (l'hydro-isomérisation) des paraffines linéaires ayant de 4 à 8 atomes de carbone par molécule peut être réalisée avec des catalyseurs bifonctionnels, associant une fonction acide et une fonction hydro-déshydrogénante. Avec ce type de catalyseur, les principales réactions parasites sont le craquage, l'hydrogénolyse, l'aromatisation et le cokage.

Les catalyseurs décrits précédemment pour l'isomérisation (l'hydro-isomérisation) des paraffines linéaires courtes (entre 4 et 6 atomes de carbone par molécule), ont aussi été utilisés en isomérisation des paraffines C₇ et C₈, mais ils présentent des rendements en produits isomérisés qui restent encore insuffisants.

Des tamis moléculaires non zéolithiques (SAPO, silico-aluminophosphates) à sélectivité de forme ont également été revendiqués, brevets US-5 114 563 et US-4 710 485, pour réaliser l'isomérisation sélective des paraffines linéaires de C₇ à C₂₀.

Ces tamis moléculaires, qui présentent des acidités beaucoup plus douces que les zéolithes, conduisent à des rendements plus intéressants en produits isomérisés, il est en effet constaté une moindre importance des réactions de craquage, réactions secondaires, lorsque l'on utilise ces solides en tant que catalyseurs d'isomérisation.

Néanmoins, ces solides présentent des activités qui sont plus faibles ce qui nécessite de les faire travailler à des températures plus élevées que les catalyseurs à base de zéolithes. Or la thermodynamique nous enseigne que toute augmentation de la température de réaction conduit à une diminution du pourcentage de produits multibranchés dans les produits de la réaction, d'où un gain en indice d'octane moindre.

### RESUME DE L'INVENTION :

Les travaux effectués nous ont conduit à montrer que, de façon surprenante, un catalyseur comprenant au moins une zéolithe de type structural TON, telles que par exemple les zéolithes ZSM-22, Θ-1, Nu-10, ISI-1 ou KZ-2, permet d'obtenir une sélectivité en produits isomérisés, monobranchés (hydro-isomérisés) améliorée par rapport aux catalyseurs connus de l'art antérieur et même dans certains cas une activité plus grande.

La présente invention concerne donc l'utilisation d'un catalyseur d'isomérisation comprenant au moins une zéolithe de type structural TON, telles que par exemple les zéolithes ZSM-22, Θ-1, Nu-10, ISI-1 ou KZ-2, décrites dans le document "Atlas of Zeolite Structure types" 4^{th} Edition, 1996, Elsevier, et au moins un élément du groupe VIII choisi dans le groupe constitué par le ruthénium, l'osmium, le rhodium, l'iridium, le platine et le palladium. Par ailleurs, le catalyseur selon l'invention présente une dispersion du métal, obtenu après réduction, inférieure à 65 %.

L'invention concerne également un procédé d'isomérisation d'une charge comprenant en majeure partie des normales paraffines comportant de 5 à 10 atomes de carbone par molécule, de préférence de 5 à 8 atomes de carbone par molécule, en présence du catalyseur selon l'invention.

Le catalyseur selon l'invention peut-être utilisé dans tout procédé d'isomérisation (ou d'hydroisomérisation) de paraffines C₅-C₁₀, de préférence C₇-C₁₀, de manière très préférée C₇-C₉ et de manière encore plus préférée C₇-C₈. Le catalyseur selon l'invention est particulièrement bien adapté à un procédé de préparation d'essences à haut indice d'octane, associant une isomérisation catalytique et une séparation.

### DESCRIPTION DETAILLEE DE L'INVENTION

Le catalyseur d'isomérisation selon l'invention comprend au moins une zéolithe de type structural TON, telles que les zéolithes ZSM-22, Θ-1, Nu-10, ISI-1 ou KZ-2, décrites dans le document "Atlas of Zeolite Structure types" 4^{th} Edition, 1996, Elsevier, au moins un élément hydro-déshydrogénant du groupe VIII choisi dans le groupe constitué par le ruthénium, l'osmium, le rhodium, l'iridium, le platine et le palladium, de préférence choisi parmi les éléments du groupe constitué par le rhodium, l'iridium, le platine et le palladium, de manière plus préférée choisi parmi le platine ou le palladium, et éventuellement au moins une matrice.

Les synthèses de zéolithes de type structural TON telle que les zéolithes ZSM-22, NU-10, Θ-1, ISI-1 ou KZ-2 utilisées dans le catalyseur selon l'invention, sont décrites dans les documents suivants : US-5 336 478 et US-4 902 402 en ce qui concerne la zéolithe ZSM-22, EP-B-0 065 400 en ce qui concerne la zéolithe NU-10, EP-B-0 057 049 pour la zéolithe Θ-1, EP-A-0 170 003 pour la zéolithe ISI-1 et l'article paru dans Zeolites 3, 8 (1983) pour la zéolithe KZ-2. Ces zéolithes peuvent être également synthétisées en milieu fluorure, selon la méthode indiquée dans le brevet EP-B-0 345 106.

Le catalyseur de la présente invention peut également éventuellement renfermer au moins une matrice habituellement amorphe ou mal cristallisée choisie par exemple dans le groupe constitué par l'alumine, la silice, la magnésie, l'oxyde de titane, la zircone, les phosphates d'aluminium, de titane ou de zirconium, l'oxyde de bore, les combinaisons des deux au moins de ces composés et les combinaisons alumine-oxyde de bore.

Lorsqu'elle est présente, la matrice est de préférence choisie dans le groupe constitué par la silice, l'alumine, la magnésie, les combinaisons silice-alumine, les combinaisons silice-magnésie.

Le catalyseur selon la présente invention comprend donc :
a) de 1 à 99 % poids, de préférence de 2 à 90% poids, de manière plus préférée 5 à 80 % poids et de manière très préférée de 10 à 70% poids, d'au moins une une zéolithe de type structural TON, telles que les zéolithes ZSM-22, Θ-1, Nu-10, ISI-1 ou KZ-2, décrites dans le document "Atlas of Zeolite Structure types" 4^{th} Edition, 1996, Elsevier, de préférence choisie dans le groupe constitué par les zéolithes ZSM-22, Θ-1, Nu-10, ISI-1 et KZ-2 et d'une manière plus préférée parmi les zéolithes ZSM-22, Θ-1 ou Nu-10.
b) de 0,01 %poids à 3 %poids, de préférence 0,05 %poids à 2 %poids, et manière plus préférée 0,1 %poids à 1,5 %poids d'au moins un élément du groupe VIII choisi dans le groupe constitué par le ruthénium, l'osmium, le rhodium, l'iridium, le platine et le palladium, de préférence choisi parmi les éléments du groupe constitué par le rhodium, l'iridium, le platine et le palladium, de manière plus préférée choisi parmi le platine ou le palladium.
c) 0 % poids à 90 %poids, de préférence 5 %poids à 85% poids, de manière plus préférée 20 %poids à 75 %poids d'au moins une matrice choisie dans le groupe constitué par l'alumine, la silice, la magnésie, l'oxyde de titane, la zircone, les phosphates d'aluminium, de titane ou de zirconium, l'oxyde de bore, les combinaisons des deux au moins de ces composés et les combinaisons alumine-oxyde de bore.

Le catalyseur de la présente invention peut être préparé par toutes les méthodes connues de l'homme du métier. Une des méthodes préférées dans la présente invention consiste à malaxer la zéolithe de type structurel TON dans un gel humide d'alumine pendant quelques dizaines de minutes, puis à passer la pâte ainsi obtenue à travers une filière pour former des extrudés de diamètre compris entre 0,4 et 4 mm.

Le catalyseur selon l'invention renferme également au moins un élément catalytique ayant une fonction hydro-déshydrogénante, par exemple un métal. La fonction hydro-deshydrogénante est généralement assurée par au moins un métal ou composé de métal du groupe VIII. L'élément du groupe VIII est choisi dans le groupe constitué par le ruthénium, l'osmium, le rhodium, l'iridium, le platine et le palladium, de préférence choisi dans le groupe constitué par le rhodium, l'iridium, le platine et le palladium, de manière plus préférée choisi parmi le platine ou le palladium. On peut également utiliser une combinaison de plusieurs des dits éléments du groupe VIII.

La fonction hydrogénante telle qu'elle a été définie précédemment peut être introduite dans le catalyseur à tout niveau de la préparation et par toute technique connue de l'homme du métier.

Elle peut éventuellement être introduite au moment du malaxage de la zéolithe de type structural TON, avec le gel d'oxyde choisi comme matrice. Elle peut être introduite par une ou plusieurs opérations d'échange ionique sur le support calciné constitué de la zéolithe de type structural TON et dispersé éventuellement dans la matrice choisie, à l'aide de solutions contenant les sels précurseurs des éléments choisis dans le groupe VIII.

Elle peut aussi être introduite sur le support (zéolithe de type structural TON et éventuellement une matrice) par toutes méthodes connues de l'homme du métier par exemple par au moins une imprégnation à sec d'une solution contenant les sels précurseurs des métaux choisis dans le groupe VIII ou par échange ionique. Elle peut aussi être introduite par échange anionique sous forme d'acide hexachloroplatinique dans le cas du platine ou sous forme de chlorure dans le cas du palladium.

Une fois le dépôt de l'élément du groupe VIII effectué, le catalyseur peut éventuellement subir un traitement d'activation sous air à haute température, par exemple à une température comprise entre 200 et 600°C, de préférence entre 250°C et 550°C, puis un traitement sous hydrogène afin de transformer l'élément du groupe VIII en métal et d'obtenir ainsi une phase métallique active. La procédure de ce traitement sous hydrogène comprend par exemple une montée lente (par exemple entre environ 1 et environ 5°C/mn) de la température sous courant d'hydrogène jusqu'à la température maximale de réduction comprise généralement entre environ 300 et 700°C, de préférence entre environ 300 et 650°C, suivie d'un maintien de cette température, généralement pendant 1 à 6 heure(s), de préférence pendant 1,5 à 4,5 heures.

D'une manière préférée la fonction métallique est introduite sous forme d'une espèce cationique, par exemple Pt(NH₃)₄²⁺, 2Cl⁻ dans le cas du platine et Pt(NH₃)₄²⁺, 2Cl⁻, par imprégnation à sec sur la zéolithe de type structural TON, qui est ensuite mise en forme par comalaxage avec un gel d'oxyde puis extrusion de l'ensemble, ou par imprégnation à sec sur le support (zéolithe de type structural TON + éventuellement matrice).

Une fois le dépôt d'au moins un élément du groupe VIII (groupes 8, 9 et 10 de la nouvelle classification) effectué, le catalyseur peut subir de manière préférée un traitement qui a pour but de diminuer la dispersion du métal (donc de la phase métallique active), sur le catalyseur prêt à l'emploi dans un réacteur d'isomérisation.

Ce traitement est effectué de manière à obtenir une dispersion du métal inférieure à 65%, de préférence inférieure à 60%, de manière encore plus préférée inférieure à 50% et de manière très préférée inférieure à 40%. En effet, la demanderesse a découvert que de façon surprenante une faible dispersion du métal, permet d'obtenir des sélectivités améliorées en paraffines isomérés mono-branchés lors de l'isomérisation de paraffines C₅ à C₁₀.

La dispersion du métal peut par exemple être mesurée par titrage avec de l'hydrogène et de l'oxygène. Dans la méthode de titrage H₂/O₂ l'élément du groupe VIII est préalablement réduit c'est-à-dire qu'il subit un traitement sous flux d'hydrogène à haute température dans des conditions telles que tous les atomes de l'élément accessibles à l'hydrogène soient transformés sous forme métallique. Ensuite, un flux d'oxygène est envoyé dans des conditions opératoires adéquates pour que tous les atomes de platine réduit accessibles à l'oxygène soit oxydés sous forme d'oxyde de l'élémént. En calculant la différence entre la quantité d'oxygène introduit et la quantité d'oxygène sortante, on accède à la quantité d'oxygène consommée. On peut déduire de cette dernière valeur la quantité de métal accessible à l'oxygène. La dispersion est alors égale au rapport quantité de métal accessible à l'oxygène sur quantité totale d'élément dans le catalyseur.

On peut citer à titre d'exemple non limitatif de traitements permettant de diminuer la dispersion du métal noble, les traitements qui suivent : les traitements comprenant au moins une étape de calcination en présence d'oxygène et au moins une étape de réduction en présence d'hydrogène ; réalisées à des températures comprises entre 200 et 800 °C.

Il est également possible de manière à réduire la dispersion du métal, de faire subir au catalyseur, avant l'étape de réduction en présence d'hydrogène, une calcination sous air humidifié à 300-750°C, et de manière préférée entre 400 et 700°C et de manière encore plus préférée entre 450 et 600°C, pendant une durée comprise entre 0,25 et 10h et de manière préférée entre 0,5 h et 5 heures. La pression partielle d'H₂O lors de la calcination est comprise entre 0,05 et 1 bar de préférence entre 0,1 et 0,5 bar. Avant l'utilisation du catalyseur, son métal doit être réduit en présence d'hydrogène.

Par ailleurs, le choix du précurseur métallique utilisé pour réaliser le dépôt du métal hydro-déshydrogénant, permet aussi d'influer sur la dispersion obtenue après les étapes de calcination et de réduction.

Le catalyseur selon l'invention peut-être utilisé dans tout procédé d'isomérisation (ou d'hydro-isomérisation) de paraffines C₅-C₁₀ de préférence C₇-C₁₀, de manière très préférée C₇-C₉ et de manière encore plus préférée C₇-C₈, le catalyseur selon l'invention est particulièrement adapté pour être utilisé dans un procédé de préparation d'essences à haut indice d'octane, associant une isomérisation catalytique et une séparation. Il est plus particulièrement bien adapté au procédé décrit dans la demande de brevet FR 97/14 891, qui comprend une section isomérisation et au moins une section permettant la séparation des paraffines dibranchées et tribranchées.

L'isomérisation (l'hydro-isomérisation) est effectuée dans au moins un réacteur. La température est comprise entre 150 et 350°C, de préférence entre 200 et 300°C, et la pression partielle d'hydrogène est comprise entre 0,1 et 7 MPa, de préférence entre 0,5 et 5 MPa. La vitesse spatiale est comprise entre 0,2 et 10 litres d'hydrocarbures liquides par litre de catalyseur et par heure, de préférence entre 0,5 et 5 litres d'hydrocarbures liquides par litre de catalyseur et par heure. Le rapport molaire hydrogène/charge à l'entrée du réacteur est tel que le rapport molaire hydrogène/charge dans l'effluent sortant du réacteur est généralement supérieur à 0,01, de préférence compris entre 0,01 et 50, de manière plus préférée compris entre 0,06 et 20.

Les exemples qui suivent précisent l'invention sans en limiter la portée.

### Exemple 1 : Préparation de la zéolithe NU-10 de type structural TON

La zéolithe NU-10 est préparée selon l'exemple 1 du brevet EP-B-0 065 400. Le solide ainsi préparé est soumis à une calcination sous air sec durant 12 h à 550°C, puis à trois échanges ioniques successifs par une solution de nitrate d'ammonium, de manière à obtenir la forme NH₄⁺ de la zéolithe.

Pour cela, 10 grammes de la zéolithe NU-10 préparée précédemment sont mis en suspension dans 100 ml d'une solution molaire de nitrate d'ammonium (5M), puis agités sous reflux durant 2 heures. Le solide est ensuite filtré, lavé. Ce cycle de traitement est reproduit encore deux fois supplémentaires. Le solide obtenu est ensuite séché à 60°C durant 10 heures.

La zéolithe NU-10 possède un rapport Si/Al=35,6 et une teneur en Na de l'ordre de 25 ppm poids

### Exemple 2 : Préparation du catalyseur C1 (conforme à l'invention)

La zéolithe préparée dans l'exemple 1 est malaxée avec un gel d'alumine. La pâte malaxée est ensuite extrudée à travers une filière de diamètre 1,4 mm. La teneur en zéolithe NU-10 de type structural TON dans le support (zéolithe + matrice) est de 80% poids.

Une imprégnation à sec avec une solution du sel de platine Pt(NH₃)₄Cl₂ est réalisée de telle manière à obtenir une teneur en platine sur le support de 0,5 % poids. Le catalyseur ainsi obtenu est dénommé C1. La dispersion du platine mesurée par titrage H₂/O₂ après calcination à 450°C, sous air sec, et réduction sous hydrogène à 420°C, est de 35%.

### Exemple 3: Préparation du catalyseur C2 (non conforme à l'invention)

Dans cet exemple une zéolithe Y désaluminée de paramètre de maille 24,42.10⁻¹⁰ m (24,42 nm) est malaxée avec un gel d'alumine. La pâte malaxée est ensuite extrudée à travers une filière de diamètre 1,4 mm. Les extrudés, contenant 80% poids de zéolithe Y, sont alors imprégnés à sec par une solution de Pt(NH₃)₄Cl₂, de manière à obtenir une teneur pondérale en platine de 0,5% poids.

La procédure de calcination/réduction utilisée est celle de l'exemple 1.

### Exemple 4: Préparation du catalyseur C3 (non conforme à l'invention)

Dans cet exemple, la zéolithe préparée dans l'exemple 1 est malaxée avec un gel d'alumine. La pâte malaxée est ensuite extrudée à travers une filière de diamètre 1,4 mm. La teneur en zéolithe NU-10 dans le support est de 80% poids.

Un dépôt de platine est alors réalisé par la méthode décrite par M.S Tzou et al. : Journal of Catalysis, 113, (1988) 220, S.T Homeyer : Journal of Catalysis, 117 (1989), 91, et A.C.M. von den Brock : Journal of Catalysis, 167, (1997), 417.

Cette méthode consiste à réaliser un échange cationique entre les sites acides de la zéolithe et une solution de Pt (NH₃)₄²⁺ (OH⁻)₂.

Le solide est ensuite chauffé sous air sec jusqu'à 450°C, avec une vitesse de montée en température de 0,5°C/minute, puis il est maintenu 2 heures sous flux d'air sec à 450°C. Il est ensuite refroidi sous azote.

Le platine est ensuite réduit sous hydrogène pur à 400°C durant 4 heures, après une montée en température de 25°C à 400°C effectuée avec une vitesse de 5°C/minute. Un échantillon du catalyseur C3 ainsi préparé est alors prélevé. L'ensemble des traitements thermiques précédemment décrits sont effectués in-situ dans le réacteur de manière à mesurer sa dispersion du platine, par titrage H₂/O₂, qui est de 75%.

### Exemple 5: Evaluation catalytique des catalyseurs C1, C2 et C3 en hydro-isomérisation du n-heptane

Préalablement à leur évaluation catalytique les catalyseurs C1 et C2 sont soumis à une calcination à 450°C sous air sec durant 4 heures. La montée en température est réalisée à une vitesse de 5°C/minute et deux paliers d'une heure chacun sont respectés à 150°C et 300°C.

La réduction de la phase métallique est réalisée in situ dans le réacteur catalytique juste avant la réalisation du test.

Les conditions de réduction pour les trois catalyseurs, sont les suivantes :
- montée en température à 7°C/minute jusqu'à 150°C sous flux d'hydrogène, palier de 30 minutes,
- puis de nouveau montée en température à 7°C/minute jusqu'à 300°C sous flux d'hydrogène, palier de 30 minutes,
- puis finalement montée en température à 7°C/minute jusqu'à 450°C sous flux d'hydrogène, palier de 60 minutes.

Le catalyseur C3 a, quant à lui, été directement réduit in-situ dans le réacteur catalytique, sous hydrogène pur à 400°C durant 4 heures, après une montée en température de 25°C à 400°C effectuée à 5°C/minute.

La température est ensuite diminuée jusqu'à la valeur de la température de réaction qui est de 250°C. Les tests catalytiques sont réalisés dans un réacteur à lit fixe en phase gazeuse. La molécule isomérisée (hydro-isomérisée) en présence d'hydrogène est le n-heptane (de pureté 99,9%), et le rapport molaire hydrogène sur n-heptane, utilisée dans les divers tests catalytiques, est de 2. La vitesse spatiale, c'est à dire la masse de n-heptane injecté par gramme de catalyseur et par heure est ajustée de telle manière à atteindre des niveaux de conversion qui permettent les comparaisons des performances des catalyseurs C1, C2 et C3.

Les produits formés sont soit des produits de craquage C₁ à C₆, soit des produits à 7 atomes de carbone par molécule, isomères du n-heptane, ou bien encore des produits aromatiques provenant des réactions d'aromatisation du n-heptane.

Les résultats catalytiques obtenus sont regroupés dans le tableau ci-après :

| % poids | (NU-10) C1 conforme | (NU-10) C3 non conforme | (Y) C2 non conforme | (NU-10) C1 conforme | (Y) C2 non conforme |
|---|---|---|---|---|---|
| Conversion n-C₇ | 84 | 84 | 83 | 90 | 90 |
| Rendement en produits de C₁-C₆- Craquage | 6 | 12 | 9,5 | 17 | 25 |
| Rendement Isomérisation | 78 | 72 | 73,5 | 73 | 65 |
| Sélectivités monobranchés | 87 | 80 | 62 | 66 | 47,2 |
| Sélectivités multibranchés | 6,1 | 5,7 | 26,4 | 15 | 25,0 |

Ce tableau met en évidence que l'utilisation d'un catalyseur selon l'invention (catalyseur C1 ) permet un gain de rendement en produits isomérisés par rapport à un catalyseur de l'art antérieur et une sélectivité en produits monobranchés supérieure aux catalyseurs C2 ou C3, non conformes à l'invention. Par ailleurs, le catalyseur selon l'invention conduit à des rendements en produits craqués, non désirés, plus faibles.

## Revendications

1. Procédé d'isomérisation d'une charge comprenant des paraffines C₅-C₁₀ en présence d'un catalyseur comprenant au moins une zéolithe de type structural TON, au moins une matrice, et au moins un élément du groupe VIII choisi dans le groupe constitué par le ruthénium, l'osmium, le rhodium, l'iridium, le platine et le palladium, et dans lequel le métal obtenu après réduction présente une dispersion inférieure à 65%.

2. Procédé selon la revendication 1 dans lequel la zéolithe est choisie dans le groupe constitué par les zéolithes ZSM-22, NU-10, Θ-1, ISI-1 et KZ-2.

3. Procédé selon l'une des revendications 1 ou 2 dans lequel la matrice est amorphe ou mal cristallisée, et choisie dans le groupe constitué par l'alumine, la silice, la magnésie, l'oxyde de titane, la zircone, les phosphates d'aluminium, de titane ou de zirconium, l'oxyde de bore, les combinaisons des deux au moins de ces composés et les combinaisons alumine-oxyde de bore.

4. Procédé selon l'une quelconque des revendications 1 à 3 dans lequel le catalyseur d'isomérisation comprend :
a) 1 à 99 % poids d'au moins une zéolithe de type structural TON,
b) 0,01 %poids à 3 %poids d'au moins un élément du groupe VIII choisi dans le groupe constitué par le ruthénium, l'osmium, le rhodium, l'iridium, le platine et le palladium.
c) 0 à 90% d'au moins une matrice choisie dans le groupe constitué par l'alumine, la silice, la magnésie, l'oxyde de titane, la zircone, les phosphates d'aluminium, de titane ou de zirconium, l'oxyde de bore, les combinaisons des deux au moins de ces composés et les combinaisons alumine-oxyde de bore.

5. Procédé selon la revendication 4 dans lequel le catalyseur comprend 5% et 80% poids de zéolithe de type structural TON et entre 20% et 75% poids de matrice, choisie dans le groupe constitué par la silice, l'alumine, la magnésie, les combinaisons silice-alumine, les combinaisons silice-magnésie.

6. Procédé selon l'une quelconque des revendications 1 à 5, dans lequel l'élément du groupe VIII est choisi dans le groupe constitué par le rhodium, l'iridium, le platine et le palladium.

7. Procédé selon l'une quelconque des revendications 1 à 6, dans lequel la dispersion du métal est inférieure à 50%.

8. Procédé selon l'une des revendications 1 à 7 dans lequel la charge est constituée de paraffines C₇-C₉.

9. Procédé selon l'une quelconque des revendications 1 à 8 comprenant une section isomérisation et au moins une section permettant la séparation des paraffines dibranchées et tribranchées.

10. Procédé selon l'une quelconque des revendications 1 à 9, dans lequel l'isomérisation est effectuée dans au moins un réacteur, la température est comprise entre 150 et 350°C, la pression partielle d'hydrogène est comprise entre 0,1 et 7 MPa, la vitesse spatiale est comprise entre 0,2 et 10 litres d'hydrocarbures liquides par litre de catalyseur et par heure, le rapport molaire hydrogène/charge à l'entrée du réacteur est tel que le rapport molaire hydrogène/charge dans l'effluent sortant du réacteur est supérieur à 0,01.

## Claims

1. A process for isomerising a feed comprising C₅-C₁₀ paraffins in the presence of a catalyst comprising at least one zeolite with structure type TON, at least one matrix, and at least one element from group VIII selected from the group constituted by ruthenium, osmium, rhodium, iridium, platinum and palladium, and in which the dispersion of the metal obtained after reduction is less than 65%.

2. A process according to claim 1, in which the zeolite is selected from the group constituted by ZSM-22, NU-10, O-1, ISI-1 and KZ-2 zeolites.

3. A process according to claim 1 or claim 2, in which the matrix is amorphous or of low crystallinity and is selected from the group constituted by alumina, silica, magnesia, titanium oxide, zirconia, aluminium or titanium or zirconium phosphate, boron oxide, combinations of at least two of said compounds and alumina-boron oxide combinations.

4. A process according to any one of claims 1 to 3, in which the isomerisation catalyst comprises:
a) 1% to 99% by weight of at least one zeolite with structure type TON;
b) 0.01% by weight to 3% by weight of at least one element from group VIII selected from the group constituted by ruthenium, osmium, rhodium, iridium, platinum and palladium;
c) 0 to 90% of at least one matrix selected from the group constituted by alumina, silica, magnesia, titanium oxide, zirconia, aluminium or titanium or zirconium phosphate, boron oxide, combinations of at least two of said compounds and alumina-boron oxide combinations.

5. A process according to claim 4, in which the catalyst comprises 5% to 80% by weight of zeolite with structure type TON and between 20% and 75% by weight of matrix selected from the group constituted by silica, alumina, magnesia, silica-alumina combinations and silica-magnesia combinations.

6. A process according to any one of claims 1 to 5, in which the element from group VIII is selected from the group constituted by rhodium, iridium, platinum and palladium.

7. A process according to any one of claims 1 to 6, in which the dispersion of the metal is less than 50%.

8. A process according to one of claims 1 to 7, in which the feed is constituted by C₇-C₉ paraffins.

9. A process according to any one of claims 1 to 8, comprising an isomerisation section and at least one section for separating dibranched and tribranched paraffins.

10. A process according to any one of claims 1 to 9, in which isomerisation is carried out in at least one reactor, the temperature is in the range 150°C to 350°C, the partial pressure of hydrogen is in the range 0.1 to 7 MPa, the space velocity is in the range 0.2 to 10 litres of liquid hydrocarbon per litre of catalyst per hour, and the hydrogen/feed molar ratio at the reactor inlet is such that the hydrogen/feed molar ratio in the effluent leaving the reactor is more than 0.01.

## Patentansprüche

1. Verfahren zur isomerisierung einer Beschickung, die C₅-C₁₀-Paraffine umfasst, in Gegenwart eines Katalysators, der wenigstens einen Zeolith vom Strukturtyp TON, wenigstens eine Matrix und wenigstens ein Element der Gruppe VIII umfasst, gewählt aus der Gruppe, die besteht aus Ruthenium, Osmium, Rhodium, Iridium, Platin und Palladium, in dem das erhaltene Metall nach Reduktion eine Dispersion unter 65% aufweist.

2. Verfahren nach Anspruch 1, bei dem der Zeolith aus der Gruppe gewählt wird, die besteht aus den Zeolithen ZSM-22, NU-10, Θ-1, ISI-1 und KZ-2.

3. Verfahren nach einem der Ansprüche 1 oder 2, bei dem die Matrix amorph oder schlecht kristallisiert ist und gewählt aus der Gruppe, die besteht aus Aluminiumoxid, Siliziumoxid, Magnesiumoxid, Titanoxid, Zirkoniumoxid, Aluminiumphosphaten, Titanphosphaten oder Zirkoniumphosphaten, Boroxid, Kombinationen der beiden von wenigstens diesen Verbindungen und den Kombinationen Aluminiumoxid-Boroxid.

4. Verfahren nach einem der Ansprüche 1 bis 3, bei dem der Isomerisierungskatalysator umfasst:
a) 1 bis 99 Gew.-% wenigstens eines Zeolithen vom Strukturtyp TON,
b) 0,01 Gew.-% bis 3 Gew.-% wenigstens eines Elements der Gruppe VIII, gewählt aus der Gruppe, die besteht aus Ruthenium, Osmium, Rhodium, Iridium, Platin und Palladium,
c) 0 bis 90% wenigstens einer Matrix, gewählt aus der Gruppe, die besteht aus Aluminiumoxid, Siliziumoxid, Magnesiumoxid, Titanoxid, Zirkoniumoxid, Aluminiumphosphaten, Titanphosphaten oder Zirkoniumphosphaten, Boroxid, den Kombinationen der beiden wenigstens dieser Verbindungen und den Kombinationen Aluminiumoxid-Boroxid.

5. Verfahren nach Anspruch 4, bei dem der Katalysator zwischen 5 und 80 Gew.-% Zeolith vom Strukturtyp TON und zwischen 20 und 75 Gew.-% Matrix, gewählt aus der Gruppe umfasst, die besteht aus Siliziumoxid, Aluminiumoxid, Magnesiumoxid, den Kombinationen Siliziumoxid-Aluminiumoxid, den Kombinationen Siliziumoxid-Magnesiumoxid.

6. Verfahren nach einem der Ansprüche 1 bis 5, bei dem das Element der Gruppe VIII gewählt ist aus der Gruppe, die besteht aus Rhodium, Iridium, Platin und Palladium.

7. Verfahren nach einem der Ansprüche 1 bis 6, bei dem die Dispersion des Metalls unter 50% ist.

8. Verfahren nach einem der Ansprüche 1 bis 7, bei dem die Beschickung aus C₇-C₉-Paraffinen besteht.

9. Verfahren nach einem der Ansprüche 1 bis 8, umfassend einen Isomerisierungsabschnitt und wenigstens einen Abschnitt, der die Trennung der diverzweigten und triverzweigten Paraffine ermöglicht.

10. Verfahren nach einem der Ansprüche 1 bis 9, bei dem die Isomerisierung durchgeführt wird in wenigstens einem Reaktor, die Temperatur zwischen 150 und 350°C liegt, der Wasserstoffpartialdruck zwischen 0,1 und 7 MPa liegt, die Raumgeschwindigkeit zwischen 0,2 und 10 Litern flüssiger Kohlenwasserstoffe pro Liter Katalysator und pro Stunde liegt, das Molverhältnis Wasserstoff/ Beschickung am Eingang des Reaktors derart ist, dass das Molverhältnis Wasserstoff /Beschickung in dem den Reaktor verlassenden Abstrom über 0,01 ist.
